# EUROPÄISCHE PATENTANMELDUNG

(11) **EP 2 846 157 A1**
(43) Veröffentlichungstag der Anmeldung: **11.03.2015**
(21) Anmeldenummer: 14183784.9
(22) Anmeldetag: 05.09.2014
(51) Int. Cl.: G01N 27/87

(54) **Sensoranordnung zur berührungslosen und zerstörungsfreien Charakterisierung von Proben oder Bauteilen aus nichtferromagnetischen Werkstoffen**

(30) Priorität: 06.09.2013 DE 102013015079
(71) Anmelder: Fraunhofer-Gesellschaft zur Förderung der angewandten Forschung e.V., 80686 München (DE)
(72) Erfinder: Szielasko, Dr.-Ing. Klaus, 66125 Saarbrücken (DE); Sheikh Amir, Meisam, 66117 Saarbrücken (DE); Herrmann, Prof. Dr.-Ing. Hans-Georg, 66132 Saarbrücken (DE); Tschuncky, Dr.-Ing. Ralf, 66130 Saarbrücken (DE)
(74) Vertreter: Pfenning, Meinig & Partner GbR

(57) **Zusammenfassung**

Die Erfindung betrifft eine Sensoranordnung zur zerstörungsfreien Charakterisierung von Proben oder Bauteilen aus nichtferromagnetischen Werkstoffen, bei der mindestens eine Erregerspule um einen Kern aus einem ferromagnetischen Werkstoff gewickelt ist, wobei die mindestens eine Erregerspule an eine elektrische Wechselspannungsquelle angeschlossen ist. Am Kern ist ein mit seinem Querschnitt verjüngter Bereich vorhanden. Der im Querschnitt verjüngte Bereich ist von einer Empfängerspule umwickelt. Die Empfängerspule ist an eine elektronische Auswerteeinheit angeschlossen; wobei der im Querschnitt verjüngte Bereich mit der Empfängerspule an die zu prüfende Oberfläche einer Probe oder eines Bauteils nah heranführbar ist, diese dabei jedoch nicht berührt.

## Beschreibung

Die Erfindung betrifft eine Sensoranordnung zur berührungslosen und zerstörungsfreien Charakterisierung von Proben oder Bauteilen aus nichtferromagnetischen Werkstoffen.

Auf dem Gebiet der Prüfung an Proben oder Bauteilen aus elektrisch leitfähigen Werkstoffen ist der Einsatz der Wirbelstromprüfung sehr verbreitet. Im Falle der Fehlerprüfung sollen in der Regel Ungänzen (Risse, Einschlüsse, usw.) erkannt werden. Ein solcher Fehler stellt im Werkstoff eine starke, meist mehrere Größenordnungen umfassende Unregelmäßigkeit der Leitfähigkeit und (bei ferromagnetischen Werkstoffen) der magnetischen Permeabilität dar. Immer häufiger ist jedoch auch eine Werkstoffcharakterisierung gewünscht. Dies betrifft eine Bestimmung der allgemeinen Homogenität, Kornstruktur, Werkstoffqualität, Härte, Zugfestigkeit, Eigenspannungen etc. Die zerstörungsfreie elektromagnetische Werkstoffcharakterisierung bedient sich hierbei oft der bekannten Zusammenhänge zwischen messbaren elektromagnetischen Eigenschaften (hier: Permeabilität, Leitfähigkeit) und den sonst nur zerstörend messbaren interessierenden Zielgrößen (z.B. die oben aufgeführten). Im Falle der ferromagnetischen Werkstoffe gibt es viele Varianten der Wirbelstromprüfung und weitere Verfahren der sogenannten mikromagnetischen Werkstoffcharakterisierung, die diese Zusammenhänge ausnutzen. Im Wesentlichen sind es hierbei die Permeabilität und das magnetische Hystereseverhalten, die die gewünschten mechanischen Eigenschaften widerspiegeln können.

Bei nichtferromagnetischen Werkstoffen ist jedoch mittels Wirbelstromprüfung nur eine Veränderung der elektrischen Leitfähigkeit detektierbar. Darin schlagen sich jedoch nicht alle Werkstoffeigenschaften nieder, was die Anwendbarkeit der Wirbelstromprüfung zur Werkstoffcharakterisierung einschränkt. Die Empfindlichkeit genügt nicht, um eventuell vorliegende geringe, nur minimal von 1 (Vakuum) abweichende Permeabilitätsvariationen zu erkennen. Es ist jedoch zu erwarten, dass sich einige Werkstoffeigenschaften in solchen kleinen Veränderungen der magnetischen Permeabilität niederschlagen. Ein Verfahren zur Messung der Permeabilität solcher para- und diamagnetischer Stoffe (d. h. Permeabilitätszahl µᵣ ≈ 1, aber stets µᵣ ≠ 1) wäre daher von großem Interesse.

Grundsätzlich sind hierfür hochempfindliche Magnetfeldmessungen geeignet. Setzt man den para- oder diamagnetischen Werkstoff einem magnetischen Gleichfeld aus, so verzerrt er das Magnetfeld örtlich abhängig von seiner magnetischen Permeabilität.

Bei ferromagnetischen Werkstoffen ist die (differentielle) Permeabilität durch Hysteresemessung bestimmbar. Eine Probe wird hierzu einem niederfrequenten magnetischen Wechselfeld ausgesetzt, indem ein Elektromagnet mit einer Spannung U(t) gespeist wird. Eine die Probe umschlingende Spule registriert induktiv die zeitliche Änderung dΦ/dt der magnetischen Flussdichte. Durch Integration über der Zeit t und Division durch den Probenquerschnitt kann eine Berechnung der magnetischen Flussdichte B=Φ(t)/A_{Probe} erreicht werden. Zeitgleich wird mit einer Hallsonde die magnetische Feldstärke H(t) gemessen. Eine Auftragung von B über H bildet die magnetische Hysteresekurve. Ihre Steigung dB/dH ist die magnetische Permeabilität.

Die Bestimmung der Permeabilität nichtferromagnetischer Werkstoffe kann grundsätzlich auf die gleiche Weise erfolgen, nur ist die Messempfindlichkeit der Hallsonde nicht ausreichend. Die nichtferromagnetischen Werkstoffe besitzen keine magnetische Hysterese, d.h. die magnetische Permeabilität ist konstant. Die Hysteresekurve ist in diesem Falle eine Gerade, und die Steigung der Geraden ist die magnetische Permeabilität. Diese liegt für solche Werkstoffe jedoch sehr nahe bei derjenigen von Vakuum bzw. Luft. Es ist daher mit Hallsonden oder ähnlich unempfindlichen Magnetfeldsensoren keine Unterscheidung, z.B. zwischen Aluminium und Luft möglich. Derzeit werden daher für solche Untersuchungen SQUID-Magnetometer genutzt. Diese sind jedoch mit hohem apparativem Aufwand verbunden und erfordern Kühlung mit flüssigem Stickstoff, was den Einsatz außerhalb des Labors verbietet. Förstersonden (Fluxgates) stellen eine mögliche Lösung dar, setzen aber komplizierte Auswerteelektroniken und -verfahren voraus, besitzen bei hoher Empfindlichkeit keine geringe Größe und damit keine hohe Ortsauflösung und bieten nicht die übrigen vorteilhaften Eigenschaften der Erfindung.

Es ist daher Aufgabe der Erfindung, Möglichkeiten für eine Charakterisierung von Proben oder Bauteilen aus nichtferromagnetischen Werkstoffen anzugeben, bei denen eine sehr hohe Messempfindlichkeit für Werkstoffe mit einer magnetischen Permeabilität sehr nah an der magnetischen Permeabilität von Luft oder Vakuum, bei gleichzeitig reduziertem Aufwand und geringer Baugröße, erreichbar ist.

Erfindungsgemäß wird diese Aufgabe mit einer Sensoranordnung, die die Merkmale des Anspruchs 1 aufweist, gelöst. Vorteilhafte Ausgestaltungen und Weiterbildungen der Erfindung können mit in untergeordneten Ansprüchen bezeichneten technischen Merkmalen realisiert werden.

Bei der erfindungsgemäßen Sensoranordnung ist mindestens eine Erregerspule um einen Kern aus einem ferromagnetischen Werkstoff gewickelt. Die mindestens eine Erregerspule ist an eine elektrische Wechselspannungsquelle angeschlossen. Am Kern ist ein im Querschnitt verjüngter Bereich vorhanden. Dieser im Querschnitt verjüngte Bereich ist von einer Empfängerspule umwickelt. Die Empfängerspule ist an eine elektronische Auswerteeinheit angeschlossen, mit der eine Auswertung der erfassten Messsignale erfolgen kann. Der im Querschnitt verjüngte Bereich mit der Empfängerspule wird während der Prüfung an die zu prüfende Oberfläche einer Probe oder eines Bauteils nah herangeführt und berührt diese Oberfläche dabei jedoch nicht. Der Abstand sollte jedoch so klein wie möglich gehalten werden.

Die gesamte Sensoranordnung kann vorteilhaft so in ein nicht ferromagnetisches, nicht elektrisch leitfähiges Gehäuse eingebettet sein, dass der im Querschnitt verjüngte Bereich mit der Empfängerspule maximal 2 mm von mindestens einem der Ränder des Gehäuses entfernt ist. So kann die Sensoranordnung in einem IC-Gehäuse untergebracht werden und sehr nahe an das zu messende Magnetfeld herangeführt werden.

Der im Querschnitt verjüngte Bereich kann als eine in den Kern eingestochene Nut, die auch radial umlaufend ausgebildet sein kann, gebildet sein. Dabei können die seitlichen Stirnwände senkrecht in Bezug zur Längsachse des Kerns ausgerichtet sein. Günstiger ist es jedoch, wenn der verjüngte Bereich zumindest bereichsweise sich konisch verjüngend oder mit einem Radius ausgebildet ist, so dass ein nicht so schroffer Übergang von der äußeren Mantelfläche des Kerns bis zum tiefsten Punkt des im Querschnitt verjüngten Bereichs erreicht werden kann.

Die Empfängerspule kann in einem Bereich des verjüngten Bereichs angeordnet sein, in dem kein veränderter Querschnitt auftritt und die Oberfläche im verjüngten Bereich parallel zur Längsachse des Kerns bzw. der Oberflächen der im Querschnitt nichtverjüngten Bereiche des Kerns ausgerichtet ist.

Der im Querschnitt verjüngte Bereich sollte eine Querschnittsfläche in mindestens einem Bereich aufweisen, die mindestens 50 %, bevorzugt 30 % und besonders bevorzugt 20 % kleiner als die Querschnittsfläche des Kerns im nichtverjüngten Bereich ist, um die erforderliche Messempfindlichkeit erreichen zu können.

Der Kern kann aus einem Werkstoff gebildet sein, der ausgewählt ist aus ferromagnetischen Werkstoffen, wobei solche mit hoher Permeabilität und geringen Hystereseverlusten vorteilhaft sind. Besonders bevorzugt sind reines Eisen, Silizium-Eisen-Legierungen, Nickel-Eisen-Legierungen sowie hochpermeable amorphe Legierungen.

Ein im Querschnitt verjüngter Bereich des Kerns sollte zwischen zwei nichtverjüngt ausgebildeten Bereichen des Kerns angeordnet sein. Dabei muss keine symmetrische Anordnung eingehalten werden. Die Empfängerspule kann also näher an einer Stirnfläche des Kernes als zu der gegenüberliegend angeordneten Stirnfläche innerhalb des im Querschnitt verjüngten Bereichs angeordnet sein.

Der Kern kann mit zwei Schenkeln, zwischen denen der im Querschnitt verjüngte Bereich mit der Empfängerspule angeordnet ist, ausgebildet sein. Die Schenkel sollten in einem Winkel ungleich 0° zueinander ausgerichtet sein und ein Dreieck bilden. Dadurch kann in einigen Fällen die Sensoranordnung und insbesondere die Empfängerspule noch näher an eine zu untersuchende Oberfläche einer Probe oder eines Bauteils herangeführt und dadurch die Messempfindlichkeit erhöht werden.

Die Erfindung betrifft ein Messverfahren für lokale Magnetfelder, das mit einer Sensoranordnung, die eine zur Messung sehr kleiner Permeabilitätsänderungen an einer nichtferromagnetischen Probe oder einem solchen Bauteil ausreichende Auflösung erreicht und keine Kühlung oder komplizierte Elektronik zur Auswertung benötigt. Grundsätzlich ist die Erfindung für jegliche Art der Magnetfeldmessung einsetzbar und bietet eine hohe Ortsauflösung. Sie eignet sich jedoch in besonderem Maße als Sensorprinzip für die Prüfung nichtferromagnetischer Werkstoffe.

Die Erfindung kann auch zur Generierung von starken, lokalisierten Magnetfeldern in nichtferromagnetischen Werkstoffen genutzt werden. Dies eröffnet zusätzlich die Möglichkeit der Schall- und Ultraschallerzeugung durch magnetostriktive, magnetische und Lorentz-Kräfte im Werkstoff, wie dies auch mit elektromagnetischen Ultraschallwandlern möglich ist. Ein derartiger Kombinationswandler kann auf para- und diamagnetischen Werkstoffen neben der Messung von Permeabilitätsvariationen an der aktuellen Wandlerposition auch zur Ultraschallprüfung in Impuls-Echo- bzw. Sende-Empfangs-Technik eingesetzt werden.

Der Kern einer erfindungsgemäßen Sensoranordnung kann grundsätzlich eine beliebige Querschnittsgeometrie besitzen (rund, rechteckig, ...). Er ist mit einer oder zwei Erregerspulen bewickelt, die elektrisch parallel oder seriell geschaltet sein können und nicht unbedingt symmetrisch angeordnet sein müssen. Der Kern muss nicht zwangsläufig gerade verlaufen, er darf im verjüngten Bereich auch abknicken. Die Messung setzt die Speisung der Erregerspulen mit einer sinusförmigen elektrischen Wechselspannung voraus. Die elektrische Spannung an der Empfängerspule wird ausgewertet und enthält Merkmale, die auf äußere Magnetfelder, die insbesondere im Bereich der Verjüngung ausgebildet sind, schließen lassen. Wird die Sensoranordnung klein und der verjüngte Bereich äußerlich zugänglich ausgeführt, können damit auch ortsaufgelöste Magnetfeldmessungen erfolgen.

Die Funktionsweise beruht auf der Ausbildung eines Magnetfeldes mittels der Erregerspule(n), das im Kern zu einer gewissen magnetischen Flussdichte führt, die jedoch im verjüngten Bereich stets konzentriert wird und daher dort sehr hohe Beträge nahe der Sättigung des Kerns annimmt. Bei sehr kleinen Restquerschnitten im verjüngten Bereich des Kerns ist dies auch schon bei sehr kleinen Amplituden der Erregerspannung der Fall.

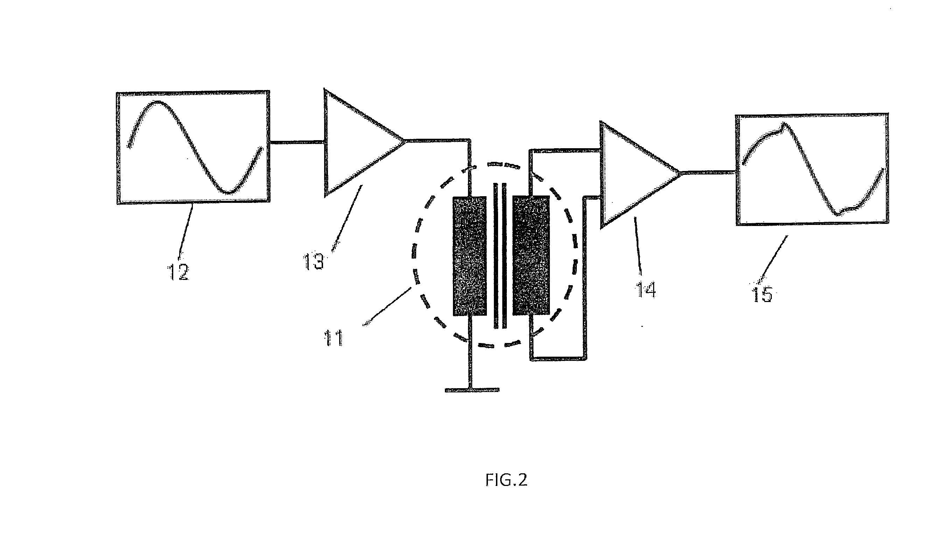

Mit der erfindungsgemäßen Sensoranordnung kann erreicht werden , dass der verjüngte Bereich des Kerns in einem kurzen Zeitraum jeder Halbwelle des Erregersignals sehr plötzlich von positiver bzw. negativer Sättigung zu negativer bzw. positiver Sättigung ummagnetisiert wird. Dies bewirkt im ansonsten konstanten Signalverlauf auffällige Extrema, wie in Figur 2 rechts bei 15 angedeutet. Der zeitliche Abstand des jeweiligen Extremums zum Nulldurchgang des Gesamtsignals oder der Abstand der Extrema zueinander, die Symmetrie des Auftretens der Extrema sind in hohem Maße vom Magnetfeld in der Umgebung des Kerns abhängig. Mittels Algorithmen zur Peakdetektion lassen sich auf unterschiedliche Art und Weise durch mathematische Berechnung Messwerte gewinnen, mit denen die äußere Magnetfeldstärke quantifiziert werden kann. Dadurch ist die Sensoranordnung zur Magnetfeldmessung geeignet.

Im Laborversuch konnte beobachtet werden, dass die Messempfindlichkeit durch günstige Dimensionierung und Werkstoffwahl sowie Verringerung der Amplitude der Erregerspannung so hoch werden kann, dass äußerst schwache Magnetfelder weit unterhalb der Stärke des Erdmagnetfeldes mit hoher Auflösung messbar werden. Die Variation der Amplitude der Erregerspannung erlaubt somit sogar eine Beeinflussung/Steuerung der Messempfindlichkeit und Dynamik der Sensoranordnung. Die Empfindlichkeit steigt exponentiell mit geringer werdender Amplitude der elektrischen Primärspannung mit der die Erregerspule(n) beaufschlagt wird/werden. Allerdings verringert sich hierbei auch die Amplitude der induzierten elektrischen Spannung, so dass in der Praxis ein Kompromiss getroffen werden muss. Es ist davon auszugehen, dass bei sehr weichmagnetischen Kernwerkstoffen (z.B. Weicheisen) durch Verringerung der Amplitude der Erregerspannung (erprobt wurden z.B. 0.1 V bei 200 Windungen der Erregerspule(n)) eine fast beliebige Steigerung der Empfindlichkeit möglich ist, solange das sekundärseitig in die Empfängerspule induzierte Signal noch groß genug ist, um ausgewertet werden zu können.

Hieraus ergibt sich als besondere Anwendungsmöglichkeit die Messung von Permeabilitätsvariationen in nichtferromagnetischen Werkstoffen. Der Werkstoff wird hierbei einem magnetischen Gleich- oder Wechselfeld ausgesetzt und die örtlich vorherrschende magnetische Feldstärke kann mit der Sensoranordnung gemessen werden.

Die Magnetisierung kann aber auch einfacher, z.B. mittels eines in der Nähe einer Probe oder eines Bauteils angeordneten Permanentmagneten erfolgen. Es kann aber auch das Erdmagnetfeld ausreichen. Bei Abtastung der Probenoder Bauteiloberfläche mit der Sensoranordnung können örtliche Veränderungen der magnetischen Permeabilität erfasst werden.

Es ist eine Ausführung der Sensoranordnung in einem geschlossenen Gehäuse, z.B. als SMD-Bauteil möglich. Hersteller von Reed-Relais oder SMD-Spulen verfügen über die geeignete Fertigungstechnologie. Es ist dabei vorteilhaft, die Sensoranordnung sehr klein auszuführen, so dass man sie sehr nah an die zu prüfende Oberfläche einer Probe oder eines Bauteils heranführen kann. Ebenfalls vorstellbar wäre das Integrieren möglichst vieler weiterer elektrischer Komponenten, wie z.B. einen Verstärker, A/D-Wandler und Funktionsgenerator.

Mit elektrischen Anschlüssen können die Erregerspule(n) kontaktiert werden. Weitere Anschlüsse sind mit der Empfängerspule verbunden und nach außen geführt. Die Sensoranordnung kann auf einer Platine gemeinsam mit Verstärkern und einem Mikrocontroller oder einer elektronischen Schaltung, in dem/der ein A/D-Wandler integriert ist, aufgebaut werden. Mikrokontroller, elektronische Schaltung und/oder A/D-Wandler können eine elektronische Auswerteeinheit bilden oder ein Teil davon sein. Es ist dabei vorteilhaft, die Sensoranordnung in einem Randbereich anzuordnen, damit ein nahes heranführen an die Oberfläche einer zu prüfenden Probe oder eines Bauteils möglich ist.

Bei der praktischen Prüfung sollte neben der Sensoranordnung bzw. der beschriebenen Sensorplatine eine zusätzliche Magnetfeldquelle, z.B. einen Permanent- oder Elektromagneten vorhanden sein. In manchen Fällen kann auch das Erdmagnetfeld ausreichen. Dieser Aufbau kann an die zu prüfende Position der Proben- oder Bauteiloberfläche herangeführt werden. Lokale Anomalien der magnetischen Permeabilität nehmen Einfluss auf die Magnetfeldverteilung im Werkstoff der Probe oder des Bauteils und können so detektiert werden.

Mit der erfindungsgemäßen Sensoranordnung sind Messgenauigkeiten für die magnetische Permeabilität besser als ±0,001. So kann die magnetische Permeabilität für Aluminiumwerkstoffe, deren Permeabilitätszahl in der Größenordnung von ca. 1,00002 liegt, bestimmt werden.

Nachfolgend soll die Erfindung anhand von Beispielen näher erläutert werden.

Dabei zeigen:
Figur 1 ein Beispiel einer erfindungsgemäßen Sensoranordnung sowie zwei mögliche Querschnittsgeometrien eines Kernes für die Sensoranordnung;
Figur 2 ein Beispiel einer elektrischen Schaltung mit einer erfindungsgemäßen Sensoranordnung;
Figur 3 zwei Beispiele einer erfindungsgemäßen Sensoranordnung in schematischer Darstellung;
Figur 4 eine Sensoranordnung, die gemeinsam mit weiteren Bauelementen auf einer Platine angeordnet ist und
Figur 5 zwei Beispiele einer Sensoranordnung mit einem ein Magnetfeld generierenden Permanentmagneten.

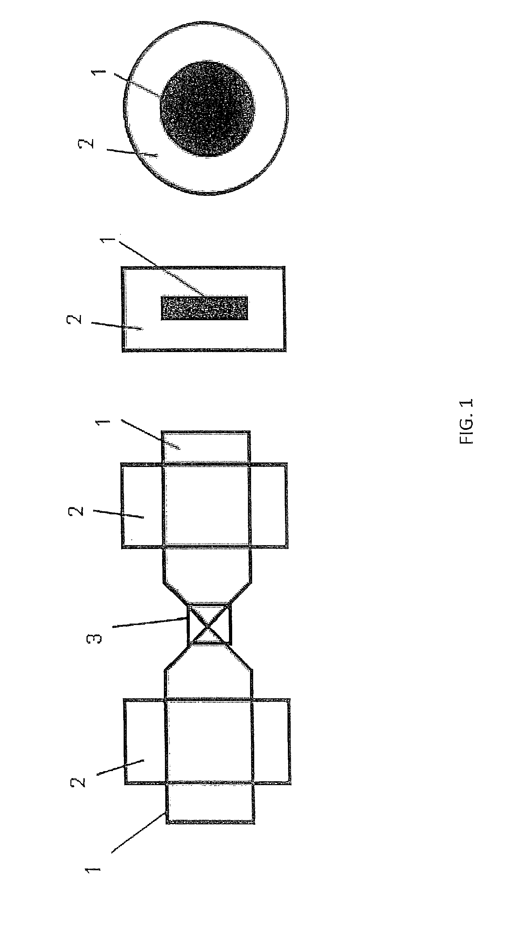

Die Figur 1 zeigt ein Beispiel einer erfindungsgemäßen Sensoranordnung. Dabei sind bei diesem Beispiel an einem Kern 1 zwei Erregerspulen 2 in einem nichtverjüngt ausgebildeten Bereich des Kerns 1 angeordnet und an eine nicht gezeigte elektrische Wechselspannungsquelle angeschlossen. Bei dem gezeigten Beispiel ist zwischen den beiden Erregerspulen 2 ein verjüngter Bereich des Kerns 1 mit deutlich kleinerer Querschnittsfläche senkrecht zur Längsachse des Kernes 1 ausgebildet. In diesem verjüngten Bereich ist eine Empfängerspule 3 angeordnet, die beispielsweise an eine elektronische Auswerteeinheit angeschlossen werden kann, wie dies zu Figur 2 beschrieben ist. Die beiden rechten Darstellungen von Figur 1 zeigen Beispiele für mögliche Querschnittsgeometrien von Kern 1 und Erregerspulen 2. Neben dem gezeigten rotationssymmetrischen kreisförmigen oder rechteckigen Querschnitt können aber auch andere mehreckige Querschnittsgeometrien eingesetzt werden. Es ist auch keine symmetrische Geometrie in Bezug zu einer oder mehreren Achsen erforderlich.

Auf eine der beiden Erregerspulen 2 kann verzichtet werden. Es ist auch keine Anordnung des verjüngten Bereichs des Kerns 1 in der Mitte zwischen den beiden Stirnseiten des Kerns 1 erforderlich. Der Kern 1 kann sogar mit zwei Schenkeln zwischen denen der im Querschnitt verjüngte Bereich mit Empfängerspule 3 angeordnet ist, so ausgebildet sein, dass die Schenkel in einem Winkel größer 0° zueinander geneigt sind und damit beispielsweise ein spitzoder stumpfwinkliges Dreieck bilden können.

Der Kern 1 kann aus reinem Eisen bestehen und durch eine mechanische Bearbeitung in die gewünschte Form gebracht werden. Durch eine Abschlussglühung können die weichmagnetischen Eigenschaften des Kerns 1 verbessert werden.

Die Erregerspulen 2 sind mit Wicklungen aus Kupferlackdraht und mit jeweils 100 Windungen mit einem Außendurchmesser von 0,2 mm gebildet. Im verjüngten Bereich ist der Kern 1 mit der Empfängerspule 3 aus Kupferlackdraht bewickelt (800 Windungen mit Außendurchmesser 18 µm).

Die Erregerspulen 2 werden mit einer sinusförmigen elektrischen Wechselspannung mit einer Amplitude von 0.5 V und einer Frequenz von 25 Hz beaufschlagt. Sie sind dabei elektrisch in Reihe geschaltet.

Der Kern 1 hat einen Außendurchmesser von 3 mm im nichtverjüngten und einen Außendurchmesser von 20 µm im verjüngten Bereich. Der verjüngte Bereich hatte eine laterale Ausdehnung parallel zur Längsachse des Kerns 1 von 1 mm.

Mit der schematisch dargestellten Schaltung von Figur 2 soll der Betrieb der Sensoranordnung und die Auswertung der erfassten Messwerte veranschaulicht werden.

Dabei ist die eigentliche Sensoranordnung 11 als Transformator dargestellt. Die Erregerspule(n) 2 ist/sind an eine elektrische Wechselspannungsquelle 12 angeschlossen. Die elektrische Spannung wird dabei über den Leistungsverstärker 13 zu der mindestens einen oder zu zwei Erregerspulen 2 der Sensoranordnung 11 geführt.

Die Empfängerspule 3 der Sensoranordnung ist an den Messverstärker 14 angeschlossen. Die erfassten und verstärkten Messsignale der Empfängerspule 3 werden mit dem A/D-Wandler 15 digitalisiert und können dann ausgewertet werden.

Die Auswertung erfordert eine Detektion der lokalen Extrema im Signal und die Bestimmung der Zeiten, an welchen sie auftreten. Hierzu bietet es sich an, eine Hochpassfilterung durchzuführen und die Maxima und Minima mit gängigen Peakdetektor-Algorithmen zu finden. In manchen Fällen kann auf die Hochpassfilterung verzichtet werden, falls die lokalen Extrema so groß sind, dass sie gleichzeitig das globale Maximum und Minimum darstellen. Eine geeignete Kenngröße für die Stärke des zu messenden Magnetfeldes, dem der Sensor ausgesetzt ist, ist die zeitliche Verschiebung der Extrema (Extremwerte) auf dem sie tragenden Restsignal. Diese Verschiebung erfolgt in den beiden Halbwellen des periodischen Restsignals in gegenläufige Richtung, so dass eine Symmetriebewertung zielführend ist (z.B. anhand der Nähe der Maxima zum zeitlichen Mittelpunkt oder den Enden der Periode). Alternativ wurde auch festgestellt, dass der Oberwellengehalt des Gesamtsignals mit dem zu messenden Magnetfeld korreliert, was zur Auswertung herangezogen werden kann. Eine (schnelle) Fourier-Transformation (FFT, DFT) des Signals ist für letztere Variante der Auswertung erforderlich.

Die Bestimmung der Permeabilität des Werkstoffs erfolgt qualitativ anhand des gemessenen Magnetfeldes, welches für Werkstoffe bzw. an Stellen höherer Permeabilität geringer ist, als an Stellen geringer Permeabilität. Ist eine quantitative Permeabilitätsbestimmung gewünscht, so ist eine Kalibrierung des Zusammenhangs zwischen Magnetfeld und Permeabilität anhand von Proben bekannter Permeabilität notwendig.

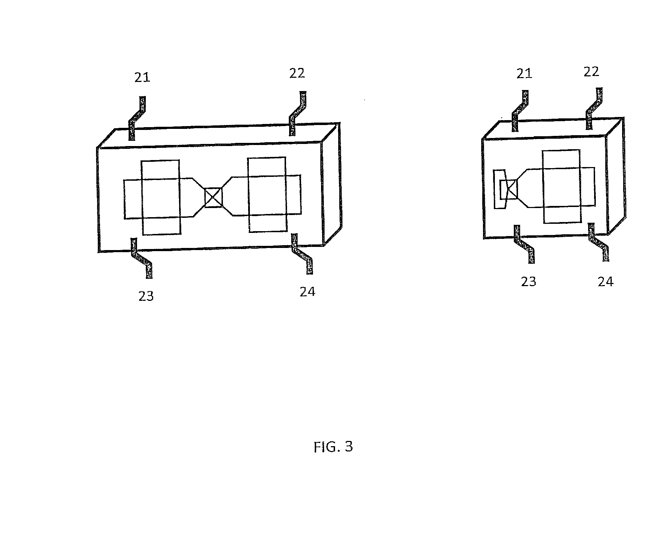

In der Figur 3 sind zwei Beispiele einer erfindungsgemäßen Sensoranordnung in einem Gehäuse gezeigt. Dabei zeigt die linke Darstellung eine Sensoranordnung mit zwei Erregerspulen 2 zwischen denen der verjüngte Bereich des Kerns 1 mit der Empfängerspule 3 angeordnet ist. Bei der rechten Darstellung ist lediglich eine Erregerspule 2 neben dem verjüngten Bereich mit Empfängerspule 3 angeordnet.

Die Erregerspule(n) 2 sind über die Anschlüsse 21 und 22 mit der elektrischen Wechselspannungsquelle verbunden. Die Messsignale der Empfängerspule 3 werden über die Anschlüsse 23 und 24 zu einer elektronischen Auswerteeinheit geführt.

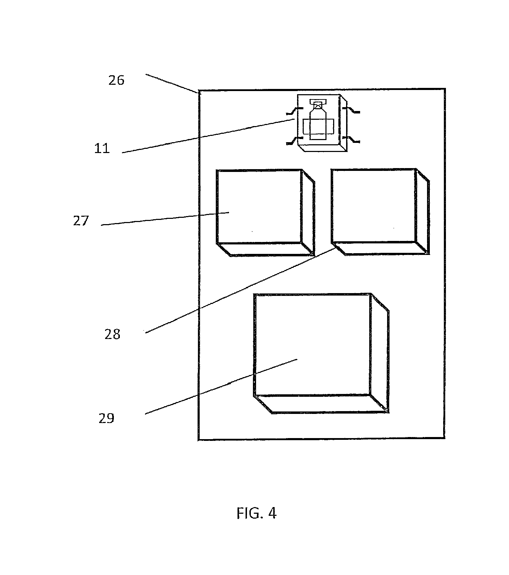

In Figur 4 ist die Anordnung einer erfindungsgemäßen Sensoranordnung 11 am äußeren Rand einer Platine 26 gezeigt. Auf der Platine 26 sind außerdem die Verstärker 27 und 28 sowie der Mikrocontroller 29 angeordnet und so miteinander verschaltet, wie dies in Figur 2 gezeigt ist. Mit der Anordnung der Sensoranordnung 11 am Rand kann diese sehr nah an eine zu prüfende Oberfläche einer Probe oder eines Bauteils 32 herangeführt werden.

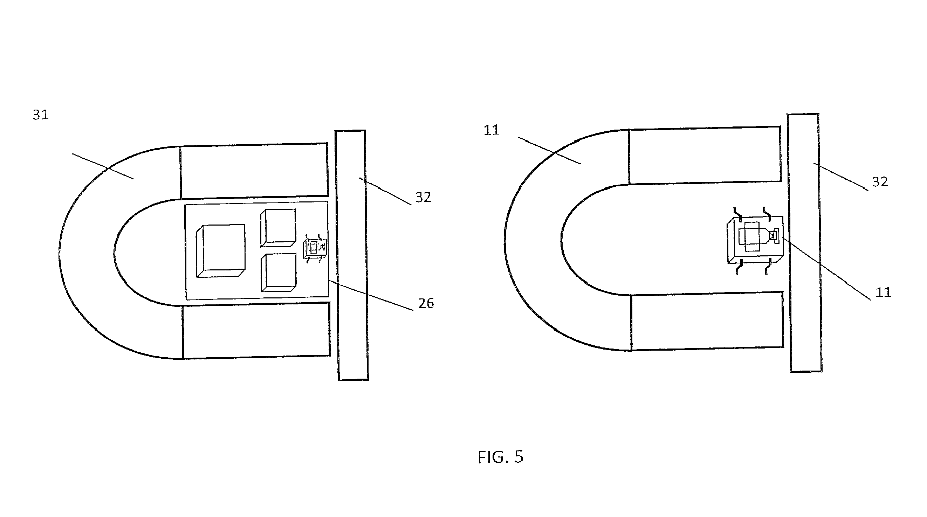

In der Figur 5 sind die Anordnung einer Sensoranordnung 11 und einer Platine 26 nach Figur 4 mit Sensoranordnung 11 in der Nähe einer Oberfläche einer Probe 32 zwischen den beiden Schenkeln eines U-förmigen Permanentmagneten 31 gezeigt, der ein stationäres homogenes Magnetfeld im zu untersuchenden Bereich der Probe 32 ausbildet. Der Permanentmagnet 31 erzeugte in der Luft (und dem nicht ferromagnetischen Werkstoff) eine Flussdichte in der Größenordung weniger mT und war mit den Stirnseiten seiner Schenkel in einem Abstand zur Oberfläche der Probe von 1 mm angeordnet. Zwischen den beiden Schenkeln des Permanentmagneten 31 verblieb ein Freiraum mit einer Breite von 10 mm, in dem die Sensoranordnung 11 mittig angeordnet war.

## Patentansprüche

1. Sensoranordnung zur zerstörungsfreien Charakterisierung von Proben oder Bauteilen aus nichtferromagnetischen Werkstoffen, bei der mindestens eine Erregerspule (2) um einen Kern (1) aus einem ferromagnetischen Werkstoff gewickelt ist, wobei die mindestens eine Erregerspule (2) an eine elektrische Wechselspannungsquelle (12) angeschlossen ist;
am Kern (1) ein mit seinem Querschnitt verjüngter Bereich vorhanden und der im Querschnitt verjüngte Bereich von einer Empfängerspule (3) umwickelt ist und
die Empfängerspule (3) an eine elektronische Auswerteeinheit angeschlossen ist; wobei
der im Querschnitt verjüngte Bereich mit der Empfängerspule (3) an die zu prüfende Oberfläche einer Probe (32) oder eines Bauteils nah heranführbar ist, diese dabei jedoch nicht berührt.

2. Sensoranordnung nach Anspruch 1, **dadurch gekennzeichnet, dass** der im Querschnitt verjüngte Bereich zumindest bereichsweise sich konisch verjüngend oder mit einem Radius ausgebildet ist.

3. Sensoranordnung nach Anspruch 1 oder 2, **dadurch gekennzeichnet, dass** der im Querschnitt verjüngte Bereich eine Querschnittsfläche in mindestens einem Bereich aufweist, die mindestens 50 % kleiner als die Querschnittsfläche des Kerns (1) im nichtverjüngten Bereich ist.

4. Sensoranordnung nach einem der vorhergehenden Ansprüche, **dadurch gekennzeichnet, dass** der Kern (1) aus einem Werkstoff gebildet ist, der ausgewählt ist aus ferromagnetischen Werkstoffen, die eine hohe Permeabilität und geringe Hystereseverluste aufweisen.

5. Sensoranordnung nach Anspruch 4, **dadurch gekennzeichnet, dass** der Kern (1) aus reinem Eisen, einer Silizium-Eisen-Legierung, einer Nickel-Eisen-Legierung oder einer hochpermeablen amorphen Legierung gebildet ist.

6. Sensoranordnung nach einem der vorhergehenden Ansprüche, **dadurch gekennzeichnet**, das ein im Querschnitt verjüngter Bereich des Kerns (1) zwischen zwei nichtverjüngt ausgebildeten Bereichen des Kerns (1) angeordnet ist.

7. Sensoranordnung nach einem der vorhergehenden Ansprüche, **dadurch gekennzeichnet, dass** der Kern (1) mit zwei Schenkeln, zwischen denen der sich im Querschnitt verjüngte Bereich mit der Empfängerspule (3) angeordnet sind, ausgebildet ist, und die Schenkel in einem Winkel ungleich 0° zueinander ausgerichtet sind.

8. Sensoranordnung nach einem der vorhergehenden Ansprüche, **dadurch gekennzeichnet, dass** die Amplitude der an die Erregerspule(n) (2) angelegten elektrischen Spannung zur Beeinflussung der Messempfindlichkeit einstellbar ist.

9. Sensoranordnung nach einem der vorhergehenden Ansprüche, **dadurch gekennzeichnet, dass** im Bereich der zu prüfenden Oberfläche einer Probe (32) oder eines Bauteils und der Sensoranordnung (11) ein Permanentmagnet (31) zur Ausbildung eines stationären Magnetfeldes angeordnet ist.

10. Sensoranordnung nach einem der vorhergehenden Ansprüche, **dadurch gekennzeichnet, dass** die Sensoranordnung (11) gemeinsam mit weiteren elektrischen oder elektronischen Elementen (27, 28, 29) auf einer Platine angeordnet ist.
